# EUROPEAN PATENT APPLICATION

(11) **EP 1 835 707 A1**
(43) Date of publication of application: **19.09.2007**
(21) Application number: 06251333.8
(22) Date of filing: 14.03.2006
(51) Int. Cl.: H04M 3/42

(54) **Communications networks**

(71) Applicant: BRITISH TELECOMMUNICATIONS public limited company, London EC1A 7AJ (GB)
(72) Inventor: The designation of the inventor has not yet been filed

(57) **Abstract**

In order to improve the quality of a communication between a call originator and a call recipient, the calling party 1 selects positively or negatively from context parameters defining the preferred status of the call recipient 2. A network routing mechanism 3 compares the context parameters requested by the calling party 1 with the recipients current context and preferences 4 and only connects the call between the parties if the context matches.

## Description

The present invention relates to communications networks and more particularly to improving the quality of communications between persons using such networks.

When a caller originates a communication, whether telephonic (voice), video or text, he or she is usually unaware of the circumstances of the intended recipient of the call at that particular time.

Call recipients of real-time two way communications are generally alerted to the "request" for communication from the originator by an audio or visual signal and may also be aware of the identity of the caller, for example by network caller identification (CLI/ANI) or by email address or messenger identity of a text caller. This identity allows the called recipient to determine how to handle the call or enables automatic apparatus to handle the call. Thus the recipient may have certain calls diverted to a voice mailbox or to another person or may have an automatic forwarding service for email which diverts emails to other email addresses or sorts emails to folders in the incoming mail program.

Call originators thus have no way of knowing, prior to attempting to establish a communication, whether that communication will actually reach the call recipient in circumstances which will achieve the desired end result.

RFC 3841 published in August 2004 (www.rfc-archive.org/getrfc.php?rfc=3841) proposes a modification of a part of the Session Initiation Protocol (SIP) to permit a communications originator to express a "preference" or a "requirement" in relation to a communication. A communication in this case using a "one number service" uses a single identifier (SIP Uniform Resource identifier (SIP URI)) which identifies all of a users devices and addresses such as a cell phone, PDA, business phone, home phone etc. The communication originator may use the SIP URI to select the end user device to which he wishes to make a call using a drop down menu. This enables the creation of a user agent (UA) including additional information related to the preferred or required communications methods from which a user agent client (UAC) can determine the capabilities required in the communication recipients apparatus to enable successful connection of the communication. RFC 3841 thus ensures that only if the communication recipient's apparatus supports the features required for the communication is a communications session initiated.

Of many patent disclosures related to controlling calls in accordance with a communication recipient's preferences, EP 1524830 discloses a method for managing communications based on statistical models of a user's activities to determine the cost of interruption and to predict presence and availability of the recipient. This results in communications being connected or rescheduled by the system based on the current activity of the communications originator and the current activity and preferences of the recipient.

United States Patent No 6,853,717 discloses a system for vetting calls through a clearing house whereby a call to a potential recipient is vetted to determine whether it is from an approved originator. If the originator is on an approved list the call will be connected whereas if it is not registered it may be offered to the recipient if the caller is willing to pay a premium and the caller accepts the call. A warning is given to the recipient prior to answer that the call is from an unregistered source.

United States Patent Application No 2003/0016804 discloses a method of determining an originating caller's location from the apparatus being used to originate the call. The call recipient's location may also be determined which enables the system to provide a route map from one location to the other.

According to the present invention there is provided a communications system including control means to collect from an originating communicator parameters of a preferred status of a recipient, the control means determining from data relating to the recipient in combination with apparatus at the recipient's location current parameters of the recipient, and comparing the parameters of the preferred status with the current parameters to determine whether a communications path between the originating communicator and the recipient should be established.

The originating communicator may select from parameters positively or negatively including named contexts such as in a specified location or at a specified event which parameters may be combined in Boolean logic to ensure that an effective communication can take place.

The parameters may also include parameters relating to the apparatus in the location of or in possession of the recipient, for example in anticipation of a long call the originator specifying that a recipient's mobile communications device is not in low battery status or specifically that a communication should only be to land line apparatus.

A second aspect of the invention provides a method of determining whether a communication session should be established including the steps of examining parameters specified by a communication originator, determining corresponding parameters in respect of a recipient of the communication session and comparing the specified parameters with the determined parameters to allow or prohibit the establishment of the communication session.

A communications system in accordance with the invention will now be described by way of example only with reference to the accompanying drawings of which:-
Figure 1 is a schematic diagram of the communications network;
Figure 2 is a more detailed block schematic diagram of the communications network of Figure 1; and
Figures 3 and 4 are signal flow diagrams for a SIP initiated communications session.

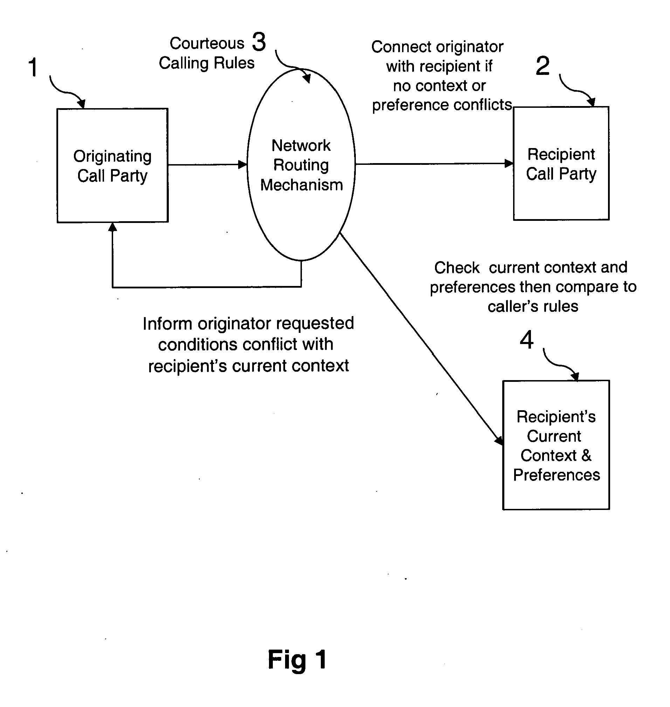

Referring first to figure 1, the basic principle of the context matching of caller and recipient can be considered as courteous calling so that an originating party (caller) 1 who wishes to communicate with a recipient 2 generates "Courteous Calling Rules" as hereinafter described. A network routing mechanism 3 (for example a platform in the network) compares the courteous calling rules of the caller 1 with stored information 4 derived from both the current context of the intended recipient which is derived from the recipients calendar, location and available personal devices for example combined with the recipients personal preferences. This enables the network routing mechanism 3 to determine the level of compatibility between the callers preferences and context and the recipients context and preferences 4, the network mechanism either connecting the communication to an appropriate recipient device or informing the caller 1 that the requested conditions (Courteous Calling Rules) and the recipients current conditions do not match.

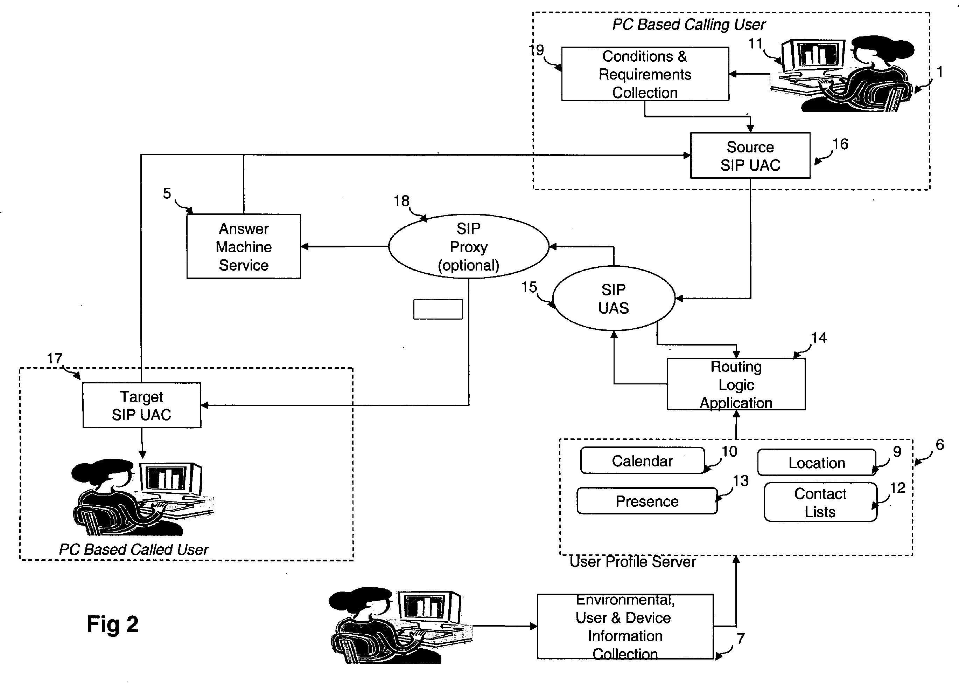

Consider then Figure 2 which shows an implementation for a VOIP (Voice Over Internet Protocol) based service and includes an answering machine service or platform 5. Prior to establishing a communication the caller 1 uses a PC 11 which includes a simple client software interface 19 which prompts for the user identity of the person (URI) the caller 1 wishes to communicate with. The caller 1 is then offered the options of selecting the conditions under which they wish to communicate with the recipient. This could be in the form of a drop down listing or a table. The PC 11 may have a facility to pre-populate such a table for example with default conditions for all calls and/or with conditions relating to the particular URI or previously entered by the caller or derived from previous communications with the same URI.

Thus acceptable conditions can be indicated for example by not selecting a particular facility in the listing, unacceptable conditions by entering, say, "N" and required conditions by entering, say, "Y". This enables the client in the PC 11 to create the additional rules for transfer during the SIP phase of the call.

A typical list to which positive and negative response from the caller 1 may be invited include (for example only) but are not limited to:
In the car
At Work
At Home
In a Meeting
Quiet Location
Near a PC
At Lunch
In the UK
On Holiday
Named Context (for example at a particular event, in a particular shop or hostelry)

Other conditions relating to the call may also be included such as the type of connection required. Examples here include
Mobile Phone
PDA
Land Line
Answer Machine/Voice message
Long Call

Including for example "long call" where the caller 1 anticipates that a call may be of extensive duration due to the subject matter the long call parameter may be used to ensure that the recipients diary has a period available (say 30 minutes) and that if the call is to a mobile phone for example that the battery in the mobile has sufficient power for a long call. Environmental conditions may also be checked so that the call will not be made if the intended recipient is in a car for example or is in a situation such as on a train where the call may drop out before completion.
As previously noted, the interface allows the calling user to select multiple items from a list of potential conditions, effectively "ANDing" the items together. It also allows them to specify a negated status to any selected items eg. (NOT "At Work") AND ("On Holiday"), etc.

The calling user can also specify alternatives by selecting from duplicated lists, effectively "ORing" items from lists e.g. (List 1 elements : "At Work" AND (NOT "In a meeting")) OR (List 2 elements : "At Lunch"). The selection interface prevents the calling user from selecting multiple items from the same list that would conflict with each other eg. "At Home" AND "At Work" cannot be selected from the same list but could be selected from different lists to produce the condition "At Home" OR "At Work". Thus any form of Boolean logic can be used to create the conditions the caller wants satisfied to ensure an effective communication.

This simple list interface enables nested IF...THEN rules to be created from the selected lists and items. The rules are formatted into a suitable mark up language capable of representing rule structures. In this case a proprietary schema was used based on ruleML. So, for example, taking the previous example given of ("At Work" AND (NOT "In A Meeting")) OR "At Lunch", the rule logic would be marked up into two rules as :

```
 <?xml version="1.0" encoding="UTF-8"?>
 <rbase xmlns:xsi="http://www.w3.org/2001/XNILSchema-instance"
 xsi:noNamespaceSchemaLocation="..\xml spy\ruleSyntax.xsd">
        <rule label="one">
              <body>
                    <and>
                             <location constraint="equal">At Work</trigger>
                             <calendar constraint="fneg">In A Meeting</calendar>
                    </and>
              </body>
              <head>
                    <action selection="Connect Call"</action>
              </head>
        </rule>
        <rule label="two">
              <body>
                    <and>
                           <calendar constraint="equal">At Lunch</calendar>
                    </and>
              </body>
              <head>
                    <action selection="Connect Call"</action>
              </head>
        </rule>
 </rbase>
```

Referring now again to figure 2, the recipients current context and preferences are held in a profile and presence server 6 which stores for each individual potential recipient data relating to the user's context. This server may be populated automatically from an environmental user and device information collection program 7which may be manually updated by an operator terminal 8 or may give the users 1,2 access by way of intranet or internet connectivity to manually update their preferences. However, it is preferable for information collection 7 to be carried out in as automatic a way as possible for example using mobile phone presence to establish the current location 9 of each user 1,2 (using GPS or triangulation data from cellular phone networks for example). This data may be combined with data retrieved from a user's calendar 10 to determine availability. User contact lists12 may be used to show variable connectivity requirements of each user to improve connectivity in a courteous calling environment.

Presence information 13 may be derived from the users current connections to mobile networks or IP networks from which the user's current devices and facilities can be derived. Thus the user profile server 6 acts as a centralised facility to hold up to date values of each users current context.

Information from the User Profile Server 6 is used by a routing logic application 14 which is invoked by the SIP user agent server 15 when an incoming SIP INVITE is initiated.

Before considering the SIP agents we will consider the user profile server 6 in which each users current context is stored as an XML file managed by the user device information collection program 7. Consider the following profile extract for user "Jane Jones":

```
 <currentContexts>
       <user id="jane.jones">
             <activeDevice>
                   <listitem>Xten</listitem>
                   <listitem>Pingtel</listitem>
             </activeDevice>
             <activeService>
                   <listitem>none</listitem>
             </activeService>
             <calendar>Meeting</calendar>
             <location>At Office</location>
             ......
       </user>
      ......
    </currentContexts>
    <contactLists>
       <user id="jane.jones">
             <barred>
                  <user id="fred.smith">
                  ......
             </barred>
             ......
       </user>
       ......
    </contactLists>
```

It can be seen from the above that there are two active devices in the profile- a PC based Xten softphone and a Pingtel SIP phone - and that Jane Jones calendar shows that she is in a meeting at her office. In the contact listing there are barred users - that is users whom Jane Jones does not wish to communicate with only one example, the user having an identity of "Fred Smith", being given. Other barred users are indicated by the dotted line continuation of the listing between <barred> being the start of user id's which are in the list to </barred> indicating the end of the listing.

In the current implementation SIP is used as the session control protocol and uses three component parts a SIP User Agent Client (SIP UAC) 16,17, the SIP User Agent Server (UAS) 15 and an optional SIP Proxy 18. Each user requires a SIP UAC 16,17.

The caller's SIP UAC 16 incorporates the called users ID into a SIP INVITE packet header together with the courteous calling parameters into the same SIP INVITE packet payload. The SIP INVITE packet is then sent to the SIP UAS 15. In the called users context the SIP UAC 17 simply accepts SIP INVITEs to initiate a communication session. For the avoidance of doubt the SIP UAC 16,17 are each capable of originating and accepting SIP INVITEs in dependence upon the current user condition so that callers can both originate and receive calls.

On receipt of a SIP INVITE the SIP UAS 15 invokes the routing logic application 14 to determine whether the SIP INVITE should be forwarded to the SIP UAC 17 or rerouted to the answering service 5.

The SIP proxy, which is optional to the implementation, may be used to forward SIP INVITEs from the SIP UAS 15 when the called user's SIP address is not know to the SIP UAS.

The routing logic application 14 determines whether the SIP UAS 15 is allowed to forward the SIP INVITE on to the SIP UAC 17. It's first task is to obtain the called users's current context from the User Profile Server 6. As each user's profile is held in the same XML file current context can be determined using simple XPath expressions as for example:
//*user[@id="jane.jones"J*/*locaction -* returns selected called party's current location,
//*user[@id="jane.jones"]*/*calendar -* returns selected called party's current calendar event,
//*user*[*@name="jane.jones"*]/*barred*/*user[@id="fred.smith"*] -> returns confirmation if Fred Smith (originating user's SIP ID) is on called party's barred list of callers, otherwise null value returned.

Having determined that the originating caller is not prevented from calling the called user by reason of the called user preferences, the routing logic application 14 now extracts the preferences and logic of the originating user by extracting the context information from the payload of the SIP INVITE packet. This is again carried out using simple XPath statements which are compared to the called user's current context values from the user profile XML file.

In a simple implementation the potential range of originating user and called user context values are the same for all users. Accordingly, the predicate values extracted from the originating user's SIP INVITE can be compared directly to the called user's context values for any matches or conflicts. In a more complex arrangement ontology and thesaurus look up tables may be provided together with fuzzy logic matching of the context values to determine the nearness of match of the two parties context requirements.

In a further development it is possible that a search ahead program could be used to determine for example the possibility of the context request being matched at a time later for example by considering time information from the calendar 10 at which the called party's context may match the specified context from the SIP INVITE.

Shown is a simple implementation in which the SIP UAS 15 redirects the SIP INVITE to the answer service 5 which may simply deliver a message indicating that the communication conditions are not currently matched. It will of course be appreciated that the answer service 5 or voice announcement service (not shown) could be used to deliver more complex responses (such as the later matching of communications contexts) or could be used to store a message for delivery at a time when the context of the called user 2 is appropriate for the context conditions provided by the originating user 1.

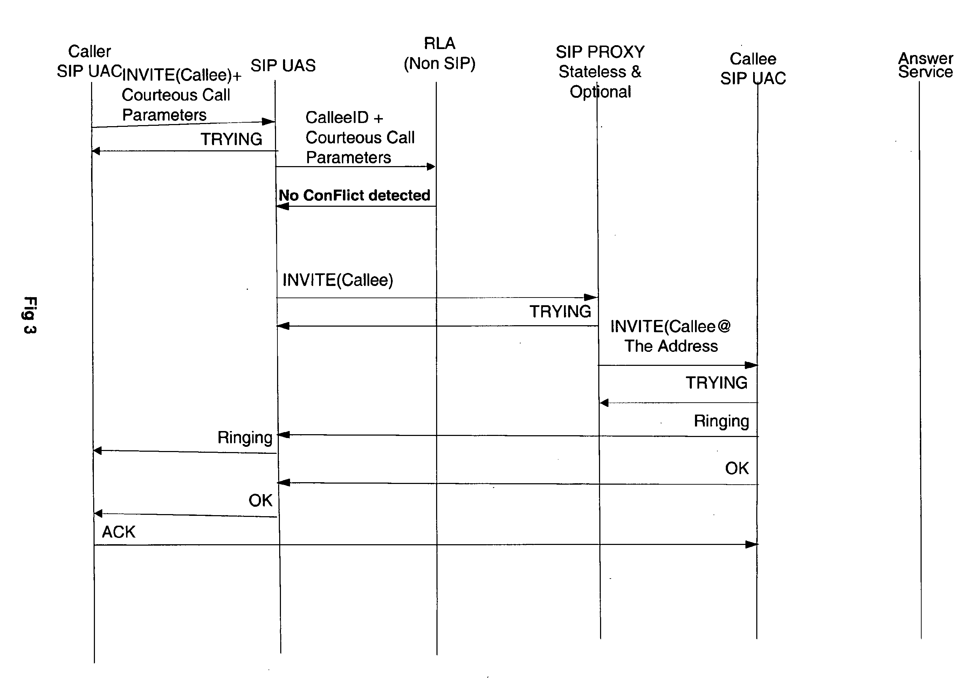

Referring then to figure 3, signal flows when there is no conflict between the originating users context request and the called user's context begin with the caller SIP UAC 16 sending a SIP INVITE to the SIP UAS 15. The SIP UAS 15 returns an acknowledgement (SIP TRYING) and invokes the routing logic application 14 by sending the called party's identity and the parameters extracted from the SIP INVITE payload.

The routing logic application returns a no conflict detected response to the SIP UAS 15 which then forwards the SIP INVITE either to the SIP PROXY 18 (as shown) or directly to the called user's SIP UAC 17 if the SIP PROXY server 18 is not present. In either case an acknowledgement (SIP TRYING) is returned to the SIP UAS 15 and ringing is initiated at the called users terminal, the called user's SIP UAC 17 returning first a ringing notification through the SIP UAS 15 to the SIP UAC 16 and the a SIP OK by the same route once the session is initiated. An acknowledge is then sent from the SIP UAC 16 to the SIP UAC 17 to commence the communications session.

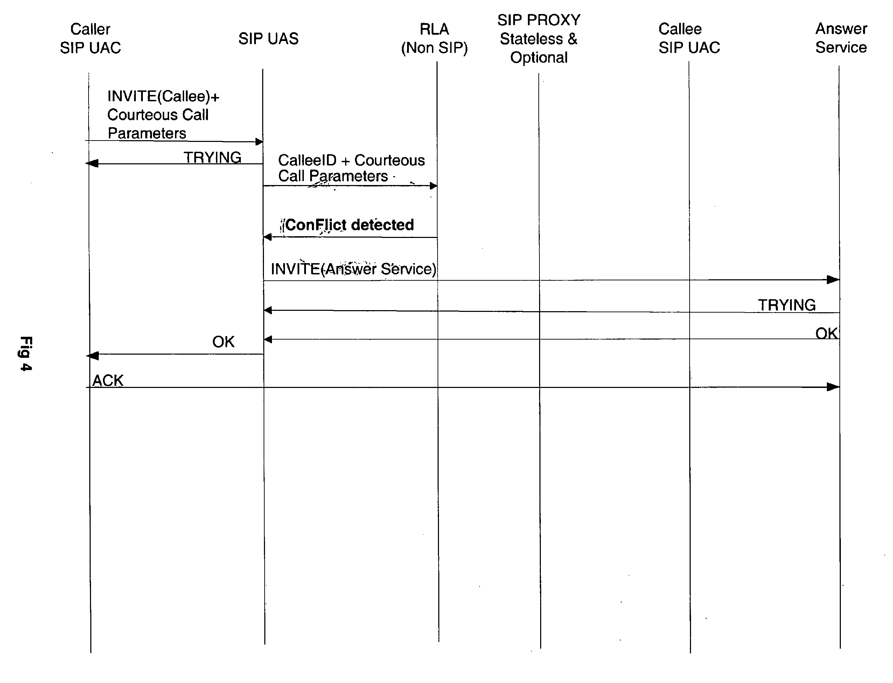

Turning then to Figure 4, where there is not a match between the originating user's requested context and the called user's context the routing logic application 14 returns a conflict detected message to the SIP UAS 15 which reroutes the SIP INVITE to the answer service 15. The answer service 5 responds to the SIP INVITE and returns SIP TRYING and SIP OK messages to the SIP UAS 15 which transmits the SIP OK message to the SIP UAC 16 and a session is established directly between the originating caller 1 and the answer service 5. An acknowledgement is then sent from the SIP UAC 16 to the answer service 5 to enable an appropriate message to be delivered.

The invention is particularly useful where telephony calls are to be established by way of connectionless networks using VOIP (voice over internet protocol) although it will be appreciated that context preference could be used for other types of communication session.

## Claims

1. A communications system including control means to collect from an originating communicator parameters of a preferred status of a recipient, the control means determining from data relating to the recipient in combination with apparatus at the recipient's location current parameters of the recipient, and comparing the parameters of the preferred status with the current parameters to determine whether a communications path between the originating communicator and the recipient should be established.

2. A communications system as claimed in claim 1 in which the originating communicator selects from parameters positively or negatively.

3. A communications system as claimed in claim 1 or claim 2 in which the originating communicator selects from parameters including named contexts.

4. A communications system as claimed in claim 3 in which the named contexts include a specified location.

5. A communications system as claimed in claim 3 or claim 4 in which the named contexts include at a specified event.

6. A communications system as claimed in any preceding claim in which parameters are combined in Boolean logic to ensure that an effective communication can take place.

7. A communications system as claimed in any preceding claim in which the parameters also include parameters relating to the apparatus in the location of the recipient.

8. A communications system as claimed in any preceding claim in which the parameters also include parameters relating to apparatus in possession of the recipient.

9. A communications system as claimed in claim 8 in which the originating communicator may specify that if the apparatus in a recipient's possession includes a mobile communications device that device is not in low battery status.

10. A communications system as claimed in any preceding claim in which one of the parameters specifies that a communication is only to land line apparatus.

11. A method of determining whether a communication session should be established including the steps of examining parameters specified by a communication originator, determining corresponding parameters in respect of a recipient of the communication session and comparing the specified parameters with the determined parameters to allow or prohibit the establishment of the communication session.
